# EUROPEAN PATENT APPLICATION

(11) **EP 4 410 107 A1**
(43) Date of publication of application: **07.08.2024**
(21) Application number: 22876158.1
(22) Date of filing: 27.09.2022
(51) Int. Cl.: A23D 9/00, A23G 1/38

(54) **FAT OR OIL FOR NON-TRANS AND NON-TEMPERED CHOCOLATES**

(30) Priority: 29.09.2021 JP 2021158637
(71) Applicant: Fuji Oil Holdings Inc., Izumisano-shi, Osaka 598-8540 (JP)
(72) Inventor: FUKAMI, Yojiro, Izumisano-shi, Osaka 598-8540 (JP); IWAOKA, Eiji, Izumisano-shi, Osaka 598-8540 (JP)
(74) Representative: Becker, Eberhard
(86) International application number: PCT/JP2022/035801
(87) International publication number: WO 2023/054291

(57) **Abstract**

The present invention addresses the problem of overcoming the weakness of fats and oils for non-trans and non-tempered chocolates, namely, insufficient bloom resistance and less compatibility with cocoa butter under cycling conditions in the medium to high temperature range. This problem of insufficient bloom resistance and less compatibility with cocoa butter under cycling conditions in the medium to high temperature range can be solved by using a fat or oil for chocolates wherein the composition of fatty acids such as lauric acid is adjusted to a specific range and the composition of CN38 to CN46 triglycerides is adjusted to a specific range.

## Description

### Technical Field

The present invention relates to an oil and/or fat, particularly an oil and/or fat used in chocolate products not subjected to a tempering operation.

### Background Art

Oils and/or fats for chocolate products widely used as cocoa butter alternatives are broadly divided into: tempered oils and/or fats for chocolate products subjected to a temperature control operation during solidification and molding; and non-tempered oils and/or fats for chocolate products not subjected to a temperature control operation. Tempered oils and/or fats for chocolate products contain a large amount of SUS triglyceride (S is a saturated fatty acid having from 16 to 20 carbons, U is a monounsaturated fatty acid having 18 carbons, and SUS triglyceride is a triglyceride in which S is bonded to positions 1 and 3 of the triglyceride and U is bonded to position 2 of the triglyceride) that is contained in a large amount in cocoa butter and have physical properties similar to those of cocoa butter. Thus, tempered oils and/or fats for chocolate products are highly compatible with cocoa butter and provide a texture similar to that of cocoa butter. However, the tempering operation requires strict temperature control and thus is desired to be omitted.

On the other hand, non-tempered oils and/or fats for chocolate products do not require a complicated tempering operation and thus can be suitably used in various combination foods in which a chocolate product is combined with bread, western confectionery, or the like. Non-tempered oils and/or fats for chocolate products can be broadly divided into oils and/or fats for trans fatty acid chocolate products, oils and/or fats for interesterified and fractionated chocolate products, as well as oils and/or fats for lauric acid chocolate products.

Among the non-tempered oils and/or fats for chocolate products, oils and/or fats for trans fatty acid chocolate products, which are obtained by hydrogenation of a liquid oil, such as soybean oil or rapeseed oil, have been widely used because of their good melt in the mouth and high compatibility with cocoa butter. In recent years, however, the risk of trans fatty acids on health has been clarified, leading to a demand for non-trans fatty acid oils and/or fats for chocolate products containing no trans fatty acids.

Since a long time ago, oils and/or fats for lauric acid chocolate products have been produced from lauric oils and/or fats, which abundantly contain a triglyceride containing a large amount of lauric acid, as raw materials. These oils and/or fats have various advantages, such as providing an extremely similar texture and physical properties to those of cocoa butter and having a good gloss. However, there has been a problem that severe bloom and/or graining could occur during storage, and thus they cannot be blended with a large amount of a cocoa component and/or cocoa butter. In addition, an undesirable soapy flavor may develop depending on the storage state of the chocolate products, and thus oils and/or fats for chocolate products with a lowered lauric acid content are demanded.

As non-trans fatty acid and non-lauric acid oils and/or fats for chocolate products are demanded as described above, interesterified and fractionated oils and/or fats for chocolate products have been developed in recent years (Patent Documents 1 to 5). The interesterified and fractionated oils and/or fats for chocolate products are produced from a raw material oil and/or fat containing substantially no lauric acid and trans fatty acid content, for example, an extremely hydrogenated oil of soybean oil or rapeseed oil, or a solid fat, such as palm oil. Such a raw material is chemically or enzymatically interesterified and then fractionated, and consequently the interesterified and fractionated oils and/or fats have good melt in the mouth. The oils and/or fats for chocolate products are oils and/or fats containing an S2U triglyceride, such as SSU and SUS, as a main component.

Regarding oils and/or fats for chocolate products having a low trans fatty acid content and containing lauric acid, Patent Documents 6 to 11 are disclosed in which a non-lauric oil and/or fat and a lauric oil and/or fat are combined by interesterification or the like.

### Citation List

### Patent Document

Patent Document 1: JP 2005-507028 T
Patent Document 2: JP 2010-532802 T
Patent Document 3: JP 2007-319043 A
Patent Document 4: WO 2011/138918
Patent Document 5: WO 2012/002373
Patent Document 6: JP 2008-182961 A
Patent Document 7: JP 2010-142152 A
Patent Document 8: JP 2010-142153 A
Patent Document 9: JP 2011-115075 A
Patent Document 10: JP 2016-116486 A
Patent Document 11: JP 2018-171001 A

### Summary of Invention

### Technical Problem

Among non-tempered oils and/or fats for chocolate products, oils and/or fats containing, as a main component, an S2U triglyceride (S is a saturated fatty acid having from 16 to 20 carbons, U is a monounsaturated fatty acid having 18 carbons, and S2U is a triglyceride with two S's and one U bonded), which are oils and/or fats for non-trans and non-lauric chocolate products as described above, usually have problems of a low solidification rate, and in particular low bloom resistance under cycle conditions of a medium to high temperature range. On the other hand, non-trans oils and/or fats for chocolate products containing a specific amount of lauric acid by interesterification or the like have a problem that the compatibility with cocoa butter decreases as the amount of lauric acid increases in the triglyceride molecule, restricting the degree of freedom in the recipe for chocolate products. Thus, there has been a demand for oils and/or fats for chocolate products which are capable of enhancing bloom resistance under cycle conditions in a medium to high temperature range and improving compatibility with cocoa butter also in non-trans and non-tempered chocolate products.

### Solution to Problem

As a result of diligent studies to solve the above problems, the present inventors have found, contrary to initial expectations, that the above problems can be solved by adjusting the lauric acid content to a specific range of a relatively low amount relative to a non-lauric, non-trans, and non-tempered oil and/or fat for chocolate products known in the art, containing a large amount of a fatty acid with a chain length of 16 carbons or more, and adjusting a CN38 to CN46 triglyceride composition to a specific range, and completed the present invention.

That is, the present invention is:
(1) an oil and/or fat for chocolate products, the oil and/or fat satisfying all of (a) to (d) below:
   (a) a trans fatty acid in total constituent fatty acids is in an amount of 5 wt.% or less;
   (b) a lauric acid content in the total constituent fatty acids is from 1 to 13 wt.%;
   (c) a fatty acid with a chain length of 16 or more carbons in the total constituent fatty acids is in an amount of 79 to 97 wt.%; and
   (d) a CN38 to CN46 triglyceride content in total triglycerides is from 6 to 37.5 wt.%,
   where the "CN38 to CN46 triglyceride" represents a triglyceride having a total number of carbons of constituent fatty acids of 38 to 46 in the triglycerides in the oil and/or fat;
(2) the oil and/or fat for chocolate products of (1), the oil and/or fat satisfying both (e) and (f) below:
   (e) a proportion of S2O in the total triglycerides is from 35 to 75 wt.%; and
   (f) a proportion of SSS in the total triglycerides is from 5 to 15 wt.%,
   where S represents a saturated fatty acid having from 16 to 20 carbons, O represents oleic acid, S2O represents a triglyceride with two S's and one O bonded, and SSS represents a triglyceride with three S's bonded;
(3) the oil and/or fat for chocolate products of (1), wherein a proportion of lauric acid in total saturated fatty acids is from 1 to 18 wt.%;
(4) the oil and/or fat for chocolate products of (2), wherein a proportion of lauric acid in total saturated fatty acids is from 1 to 18 wt.%;
(5) the oil and/or fat for chocolate products of (3), wherein a proportion of an unsaturated fatty acid in the total constituent fatty acids is 15 wt.% or more;
(6) the oil and/or fat for chocolate products of (4), wherein a proportion of an unsaturated fatty acid in the total constituent fatty acids is 15 wt.% or more;
(7) the oil and/or fat for chocolate products of (5), the oil and/or fat satisfying all of SFC % below:
   - SFC at 10°C is 80% or more;
   - SFC at 20°C is from 55% to 95%; and
   - SFC at 40°C is 8% or less;
(8) the oil and/or fat for chocolate products of (6), the oil and/or fat satisfying all of SFC % below:
   - SFC at 10°C is 80% or more;
   - SFC at 20°C is from 55% to 95%; and
   - SFC at 40°C is 8% or less;
(9) the oil and/or fat for chocolate products of (7), wherein a stearic acid content in the total constituent fatty acids is from 11 to 20 wt.%;
(10) the oil and/or fat for chocolate products of (8), wherein a stearic acid content in the total constituent fatty acids is from 11 to 20 wt.%;
(11) a chocolate product produced using 20 wt.% or more of the oil and/or fat for chocolate products of (1) to (10);
(12) a method for producing the oil and/or fat for chocolate products of (1) to (10), the method including fractionating an interesterified oil with a lauric acid content of 1 to 25 wt.% and a ratio of palmitic acid content/stearic acid content of 1.5 to 5 in constituent fatty acids to remove a high melting point fraction or a high melting point fraction and a low melting point fraction;
(13) an oil and/or fat satisfying all of (a) to (d) below, the oil and/or fat having a function of suppressing transition of an oil and/or fat crystal in a chocolate product to β-form by being blended in the chocolate product:
   (a) a trans fatty acid in total constituent fatty acids is in an amount of 5 wt.% or less;
   (b) a lauric acid content in the total constituent fatty acids is from 1 to 13 wt.%;
   (c) a fatty acid with a chain length of 16 or more carbons in the total constituent fatty acids is in an amount of 79 to 97 wt.%; and
   (d) a CN38 to CN46 triglyceride content in total triglycerides is from 6 to 37.5 wt.%,
   where the "CN38 to CN46 triglyceride" represents a triglyceride having a total number of carbons of constituent fatty acids of 38 to 46 in the triglycerides in the oil and/or fat; and
(14) a method for suppressing transition of an oil and/or fat crystal in a chocolate product to β-form by blending the oil and/or fat for chocolate products of (1) to (10) in the chocolate product.

In addition, in other words, the present invention relates to:
(21) an oil and/or fat satisfying all of (a) to (d) below, the oil and/or fat having a function of suppressing transition of an oil and/or fat crystal in a chocolate product to β-form by being blended in the chocolate product:
   (a) a trans fatty acid in total constituent fatty acids is in an amount of 5 wt.% or less;
   (b) a lauric acid content in the total constituent fatty acids is from 1 to 13 wt.%;
   (c) a fatty acid with a chain length of 16 or more carbons in the total constituent fatty acids is in an amount of 79 to 97 wt.%; and
   (d) a CN38 to CN46 triglyceride content in total triglycerides is from 6 to 37.5 wt.%,
   where the "CN38 to CN46 triglyceride" represents a triglyceride having a total number of carbons of constituent fatty acids of 38 to 46 in the triglycerides in the oil and/or fat;
(22) the oil and/or fat for chocolate products of (21), the oil and/or fat satisfying both (e) and (f) below:
   (e) a proportion of S2O in the total triglycerides is from 35 to 75 wt.%; and
   (f) a proportion of SSS in the total triglycerides is from 5 to 15 wt.%,
   where S represents a saturated fatty acid having from 16 to 20 carbons, O represents oleic acid, S2O represents a triglyceride with two S's and one O bonded, and SSS represents a triglyceride with three S's bonded;
(23) the oil and/or fat for chocolate products of (21), wherein a proportion of lauric acid in total saturated fatty acids is from 1 to 18 wt.%;
(24) the oil and/or fat for chocolate products of (22), wherein a proportion of lauric acid in total saturated fatty acids is from 1 to 18 wt.%;
(25) the oil and/or fat for chocolate products of (23), wherein a proportion of an unsaturated fatty acid in the total constituent fatty acids is 15 wt.% or more;
(26) the oil and/or fat for chocolate products of (24), wherein a proportion of an unsaturated fatty acid in the total constituent fatty acids is 15 wt.% or more;
(27) the oil and/or fat for chocolate products of (25), the oil and/or fat satisfying all of SFC % below:
   - SFC at 10°C is 80% or more;
   - SFC at 20°C is from 55% to 95%; and
   - SFC at 40°C is 8% or less;
(28) the oil and/or fat for chocolate products of (26), the oil and/or fat satisfying all of SFC % below:
   - SFC at 10°C is 80% or more;
   - SFC at 20°C is from 55% to 95%; and
   - SFC at 40°C is 8% or less;
(29) the oil and/or fat for chocolate products of (27), wherein a stearic acid content in the total constituent fatty acids is from 11 to 20 wt.%;
(30) the oil and/or fat for chocolate products of (28), wherein a stearic acid content in the total constituent fatty acids is from 11 to 20 wt.%;
(31) a chocolate product produced using 20 wt.% or more of the oil and/or fat for chocolate products of (21) to (30); and
(32) a method for producing the oil and/or fat for chocolate products of (21) to (30), the method including fractionating an interesterified oil with a lauric acid content of 1 to 25 wt.% and a ratio of palmitic acid content/stearic acid content of 1.5 to 5 in constituent fatty acids to remove a high melting point fraction or a high melting point fraction and a low melting point fraction.

### Advantageous Effects of Invention

An embodiment of the present invention makes it possible to provide a non-trans and non-tempered oil and/or fat for chocolate products, which is capable of suppressing bloom development and ensuring compatibility with a specific amount of cocoa butter also in chocolate products containing large amounts of a cocoa component and/or cocoa butter.

### Description of Embodiments

The present invention will be described in detail below.

The term "non-trans" in the present invention means that an oil and/or fat containing a trans fatty acid, such as a hydrogenated oil (excluding an extremely hydrogenated oil), is not substantially used as a raw material. Specifically, an oil and/or fat for chocolate products according to an embodiment of the present invention is required to have a trans fatty acid content of 5 wt.% or less, and the content is more preferably 4 wt.% or less, even more preferably 3 wt.% or less, and most preferably 2 wt.% or less.

In addition, the term "non-tempered" in the present invention means that when a chocolate product is produced using such an oil and/or fat for chocolate products, the oil and/or fat for chocolate products is a type from which a chocolate product can also be prepared by a method of simply cooling and solidifying without a tempering treatment by temperature adjustment, addition of a seed agent, and the like.

The oil and/or fat for chocolate products according to an embodiment of the present invention is characterized in that a specific amount of lauric acid is contained in a triglyceride molecule to improve bloom resistance and compatibility with cocoa butter over non-trans and non-tempered oils and/or fats for chocolate products in the art, which are non-lauric and mainly composed of S2U (S is a saturated fatty acid having from 16 to 20 carbons, U is a monounsaturated fatty acid having 18 carbons, and S2U is a triglyceride with two S's and one U bonded). The specific lauric acid content in total constituent fatty acids needs to be from 1 to 13 wt.%, and the content is more preferably from 1.5 to 12 wt.%, even more preferably from 2 to 11 wt.%, and most preferably from 2.5 to 10 wt.%. The lauric acid content of 1 to 13 wt.% in the total constituent fatty acids can ensure both compatibility with a specific amount of cocoa butter and bloom resistance under cycle conditions in a medium to high temperature range.

The fatty acid with a chain length of 16 or more carbons in the total constituent fatty acids in the oil and/or fat for chocolate products according to an embodiment of the present invention needs to be in an amount of 79 to 97 wt.%, and the amount is preferably from 81 to 97 wt.%, more preferably from 83 to 97 wt.%, and even preferably from 84 to 97 wt.%. The fatty acid with a chain length of 16 or more carbons in an amount of 79 to 97% in the total constituent fatty acids in the oil and/or fat for chocolate products according to an embodiment of the present invention can ensure both compatibility with a specific amount of cocoa butter and bloom resistance under cycle conditions in a medium to high temperature range.

CN38 to CN46 triglyceride (triglyceride having a total number of carbons of constituent fatty acids of 38 to 46 in the triglycerides in the oil and/or fat) content in total triglycerides in the oil and/or fat for chocolate products according to an embodiment of the present invention needs to be from 6 to 37.5 wt.%, and the content is preferably from 6 to 34.5 wt.%, more preferably from 6.5 to 32.5 wt.%, and even more preferably from 6.5 to 30.5 wt.%. The CN38 to CN46 triglyceride content of 6 to 37.5 wt.% in the total triglycerides in the oil and/or fat for chocolate products according to an embodiment of the present invention can ensure both compatibility with a specific amount of cocoa butter and bloom resistance under cycle conditions in a medium to high temperature range.

The mechanism for providing high bloom resistance in the present invention, although being a presumption, is probably because the polymorphic transition of the crystals in the oil and/or fat for chocolate products from the β'-form to the β-form is suppressed by blending the oil and/or fat having a specific fatty acid composition and a specific triglyceride composition in a chocolate product.

The proportion of P2O (where P is palmitic acid, O is oleic acid, and P2O is a triglyceride with two P's and one O bonded) in the total triglycerides in the oil and/or fat for chocolate products according to an embodiment of the present invention is preferably from 20 to 60 wt.%. The proportion is more preferably from 22 to 50 wt.%, even more preferably from 25 to 45 wt.%, and most preferably from 25 to 40 wt.%.

The proportion of PStO (where P is palmitic acid, St is stearic acid, O is oleic acid, and PStO is a triglyceride with one P, one St, and one O bonded) in the total triglycerides in the oil and/or fat for chocolate products according to an embodiment of the present invention is preferably from 10 to 35 wt.%. The proportion is more preferably from 11 to 33 wt.%, even more preferably from 12 to 30 wt.%, and most preferably from 13 to 25 wt.%.

The proportion of St2O (where St is stearic acid, O is oleic acid, and St2O is a triglyceride with two St's and one O bonded) in the total triglycerides in the oil and/or fat for chocolate products according to an embodiment of the present invention is preferably from 2 to 6 wt.%. The proportion is more preferably from 2.5 to 5 wt.% and even more preferably from 2.5 to 4 wt.%.

The proportion of S2O (where O is oleic acid, S is a saturated fatty acid having from 16 to 20 carbons, and S2O is a triglyceride with two S's and one O bonded) in the total triglycerides in the oil and/or fat for chocolate products according to an embodiment of the present invention is preferably from 35 to 75 wt.%. The proportion is more preferably from 38 to 70 wt.% and even more preferably from 40 to 65 wt.%. The proportion of S2O of 35 to 75 wt.% in the total triglycerides in the oil and/or fat for chocolate products according to an embodiment of the present invention can ensure both compatibility with a specific amount of cocoa butter and bloom resistance under cycle conditions in a medium to high temperature range.

The proportion of SSS (where S is a saturated fatty acid having from 16 to 20 carbons, and SSS is a triglyceride with three S's bonded) in the total triglycerides in the oil and/or fat for chocolate products according to an embodiment of the present invention is preferably from 5 to 15 wt.%. The proportion is more preferably from 6 to 14 wt.%, even more preferably from 7 to 13 wt.%, and most preferably from 8 to 13 wt.%. The proportion of SSS of 5 to 15 wt.% in the total triglycerides in the oil and/or fat for chocolate products according to an embodiment of the present invention can ensure both compatibility with a specific amount of cocoa butter and bloom resistance under cycle conditions in a medium to high temperature range.

The stearic acid content in the total constituent fatty acids in the oil and/or fat for chocolate products according to an embodiment of the present invention is preferably from 11 to 20 wt.%. The content is more preferably from 12 to 19 wt.% and even more preferably from 13 to 18 wt.%.

The proportion of lauric acid in total saturated fatty acids in the oil and/or fat for chocolate products according to an embodiment of the present invention is preferably from 1 to 18 wt.%. The proportion is more preferably from 1.5 to 16 wt.% and even more preferably from 2 to 14 wt.%. The proportion of lauric acid in the total saturated fatty acids of 1 to 18 wt.% in the oil and/or fat for chocolate products according to an embodiment of the present invention can ensure both compatibility with a specific amount of cocoa butter and bloom resistance under cycle conditions in a medium to high temperature range.

The proportion of an unsaturated fatty acid in the total constituent fatty acids in the oil and/or fat for chocolate products according to an embodiment of the present invention is preferably from 15 to 45 wt.%. The proportion is more preferably from 17 to 40 wt.%, even more preferably from 18 to 37 wt.%, still more preferably from 19 to 35 wt.%, and most preferably from 20 to 32 wt.%. The proportion of an unsaturated fatty acid of 15 to 45 wt.% in the total constituent fatty acids in the oil and/or fat for chocolate products according to an embodiment of the present invention can ensure both compatibility with a specific amount of cocoa butter and bloom resistance under cycle conditions in a medium to high temperature range.

The oil and/or fat for chocolate products according to an embodiment of the present invention preferably has a solid fat content at 10°C of 80 to 100%. The solid fat content is more preferably from 85 to 99%, even more preferably from 87 to 98%, still more preferably from 88 to 96%, and most preferably from 89 to 96%. The oil and/or fat with a solid fat content in the preferred ranges described above is preferred in terms of good shape retention when the oil and/or fat is made into a chocolate product.

The oil and/or fat for chocolate products according to an embodiment of the present invention preferably has a solid fat content at 20°C of 55 to 95%. The solid fat content is more preferably from 60 to 92%, even more preferably from 66 to 90%, still more preferably from 70 to 90%, yet more preferably from 73 to 90%, and most preferably from 75 to 90%. The oil and/or fat with a solid fat content in the preferred ranges described above is preferred in terms of good shape retention when the oil and/or fat is made into a chocolate product.

The oil and/or fat for chocolate products according to an embodiment of the present invention preferably has a solid fat content at 25°C of 40 to 80%. The solid fat content is more preferably from 43 to 78%, even more preferably from 46 to 75%, still more preferably from 50 to 75%, yet more preferably from 52 to 75%, and most preferably from 55 to 75%. The oil and/or fat with a solid fat content in the preferred ranges described above is preferred in terms of good shape retention when the oil and/or fat is made into a chocolate product.

The oil and/or fat for chocolate products according to an embodiment of the present invention preferably has a solid fat content at 30°C of 20 to 60%. The solid fat content is more preferably from 23 to 55%, even more preferably from 26 to 50%, still more preferably from 28 to 50%, and most preferably from 30 to 50%. The oil and/or fat with a solid fat content in the preferred ranges described above is preferred in terms of good shape retention when the oil and/or fat is made into a chocolate product.

The oil and/or fat for chocolate products according to an embodiment of the present invention preferably has a solid fat content at 35°C of 5 to 30%. The solid fat content is more preferably from 8 to 28%, even more preferably from 11 to 26%, still more preferably from 13 to 26%, and most preferably from 15 to 26%. The oil and/or fat with a solid fat content in the preferred ranges described above is preferred in terms of good melt in the mouth when the oil and/or fat is made into a chocolate product.

The oil and/or fat for chocolate products according to an embodiment of the present invention preferably has a solid fat content at 40°C of 8% or less. The solid fat content is more preferably from 1 to 8%, even more preferably from 1.5 to 8%, and most preferably from 2 to 8%. The oil and/or fat with a solid fat content in the preferred ranges described above is preferred in terms of good melt in the mouth when the oil and/or fat is made into a chocolate product.

The oil and/or fat for chocolate products according to an embodiment of the present invention can be produced, for example, by subjecting a raw oil and/or fat mixture to random interesterification and then performing a fractionation operation, and obtained as an oil and/or fat of a low melting point fraction or a medium melting point fraction. For such a fractionation operation method, a method, such as solvent fractionation or non-solvent fractionation, can be selected. In addition, the oil and/or fat can be obtained by preparing a plurality of oils and/or fats of the low melting point fraction or the medium melting point fraction and mixing them.

Here, the raw oil and/or fat can be exemplified by vegetable oils and/or fats, such as palm oil, rapeseed oil, high erucic acid rapeseed oil, sunflower oil, high-oleic sunflower oil, soybean oil, rice oil, corn oil, cottonseed oil, peanut oil, safflower oil, safflower oil, olive oil, sesame oil, palm kernel oil, coconut oil, medium-chain fatty acid-bound triglycerides (MCTs), shea butter, and sal fat; animal oils and/or fats, such as milk fat, beef tallow, lard, fish oil, and whale oil; and their hydrogenated oils, fractionated oils, hydrogenated fractionated oils, fractionated hydrogenated oils, and processed oils and/or fats obtained by interesterification; and furthermore mixed oils and/or fats thereof.

In particular, one or more of palm oil, palm kernel oil, and high-oleic sunflower oil can be suitably used as essential raw oils and/or fats.

The interesterified oil used as a raw material for the oil and/or fat for chocolate products according to an embodiment of the present invention preferably has a lauric acid content of 1 to 25 wt.%. The lauric acid content is more preferably from 2 to 20 wt.%. In addition, the interesterified oil used as a raw material for the oil and/or fat for chocolate products according to an embodiment of the present invention preferably has a ratio of the palmitic acid content/stearic acid content of 1.5 to 5. The ratio is more preferably from 2 to 4.

The method of the random interesterification may be a method using a chemical catalyst or a method by an enzyme catalyst. For the chemical catalyst, for example, an alkali metal catalyst, such as sodium methylate, can be used. Examples of the enzyme catalyst include lipases of the genus *Alcaligenes*, the genus *Penicillium,* and the genus *Thermomyces.* These lipases may be used after being immobilized on an ion-exchange resin, diatomaceous earth, or the like by a known method, or may be used in the form of a powder.

The used amount of the oil and/or fat for chocolate products according to an embodiment of the present invention is preferably from 20 to 65 wt.%, more preferably from 25 to 60 wt.%, and even more preferably from 25 to 50 wt.% relative to the entire chocolate product.

To the oil and/or fat for chocolate products according to an embodiment of the present invention, an optional component used in the application for typical chocolate products can be appropriately added, such as a colorant, an emulsifier, an antioxidant, or a flavoring agent. These optional components are added in an amount of 20 wt.% or less and preferably 10 wt.% or less relative to the oil and/or fat for chocolate products according to an embodiment of the present invention.

In addition, examples of the emulsifier include a glycerol fatty acid ester, a sucrose fatty acid ester, a sorbitan fatty acid ester, a glycerol organic acid fatty acid ester, a polyglycerol fatty acid ester, and lecithin.

The oil and/or fat for chocolate products according to an embodiment of the present invention obtained as described above can be used alone, or blended with cocoa butter, as an oil and/or fat for chocolate products, and a chocolate product can be produced without a tempering treatment. The term "chocolate product" as used in the present invention may collectively refer to "pure chocolate", "chocolate", and "quasi-chocolate" as defined by the Japan Fair Trade Council of Chocolate Industry, as well as "chocolate-like foods" composed of an oil and/or fat other than cocoa butter and an edible material other than cocoa solid contents, and other foods, for example, curry flavor or cheese flavor food in which an edible material is dispersed in an oil and/or fat used as a base.

### Examples

The present invention will be specifically described with examples below. Numerical values are expressed on a weight basis unless otherwise specified.

### Measurement method of fatty acid composition

The constituent fatty acid composition of the oil and/or fat was determined by Standard Methods for Analysis of Fats, Oils and Related Materials 2.4.2.1-2013.

### Measurement method of triglyceride composition (total number of carbons)

The triglyceride composition (total number of carbons) of the oil and/or fat was measured in accordance with 2.4.6 Triacylglycerol Composition (gas chromatography) in Standard Methods for Analysis of Fats, Oils and Related Materials established by Japan Oil Chemists' Society.

### Measurement method of triglyceride composition (molecular species)

The triglyceride composition (molecular species) of the oil and/or fat was measured by high-performance liquid chromatography in accordance with Standard Methods for Analysis of Fats, Oils and Related Materials 2.4.6.2-2013. The measurement was carried out using an ODS column at a column temperature of 25°C, an eluent of acetone/acetonitrile (80/20) at a liquid volume of 0.9 mL/min, and a differential refractometer as a detector. In the case of this measurement, PStL (triglyceride with one palmitic acid, one stearic acid, and one linoleic acid bonded) may be detected in the peak of P2O. The molecular species of each peak was identified based on the measurement results of a known POP concentrate or SOS concentrate containing no lauric acid.

### Measurement method of SFC

The analyzer used was "minispec mq20" available from Bruker Corporation. SFC measurement was performed in accordance with IUPAC 2.150a (Solid Content Determination in Fats by NMR).

### Production Example 1

A blended oil (a lauric acid content of less than 1% and a palmitic acid content/stearic acid content ratio of 3.3 in the blended oil) containing 43 wt.% of a palm oil, 34 wt.% of a palm fractionated high melting point fraction (iodine value of 12), 12 wt.% of an extremely hydrogenated high-oleic sunflower oil (iodine value of 2), and 11 wt.% of a high-oleic sunflower oil was randomly interesterified using sodium methylate, and the resulting interesterified oil and/or fat was fractionated with hexane and acetone to remove a high melting point fraction and a low melting point fraction. The resulting fractionated medium melting point fraction was decolorized and deodorized according to a common method, and an oil and/or fat A was obtained.

### Production Example 2

A blended oil (a lauric acid content of 16.3% and a palmitic acid content/stearic acid content ratio of 2.7 in the blended oil) containing 45 wt.% of a palm oil, 5 wt.% of a palm fractionated high melting point fraction (iodine value of 31), 35 wt.% of a palm kernel oil, 8 wt.% of a high-oleic sunflower oil, and 7 wt.% of an extremely hydrogenated high-oleic sunflower oil (iodine value of 2) was randomly interesterified using sodium methylate, and the resulting interesterified oil and/or fat was fractionated with hexane to remove a high melting point fraction and a low melting point fraction. The resulting fractionated medium melting point fraction was decolorized and deodorized according to a common method, and an oil and/or fat B was obtained.

### Production Example 3

An oil and/or fat C was obtained in the same manner as in Production Example 1 except that a blended oil (a lauric acid content of 3.4% and a palmitic acid content/stearic acid content ratio of 2.9 in the blended oil) containing 24 wt.% of a palm oil, 43.5 wt.% of a palm fractionated high melting point fraction (iodine value of 12), 8 wt.% of a palm kernel oil, 14 wt.% of an extremely hydrogenated high-oleic sunflower oil (iodine value of 2), and 10.5 wt.% of a high-oleic sunflower oil was used as the blended oil for the randomly interesterified oil.

### Production Example 4

An oil and/or fat D was obtained in the same manner as in Production Example 2 except that a blended oil (a lauric acid content of 17.5% and a palmitic acid content/stearic acid content ratio of 3.3 in the blended oil) containing 18.8 wt. % of a palm fractionated high melting point fraction (iodine value of 31), 30.4 wt.% of a palm fractionated high melting point fraction (iodine value of 12), 18.2 wt.% of an extremely hydrogenated palm oil, and 32.6 wt.% of a palm kernel fractionated high melting point fraction extremely hydrogenated oil (an iodine value of the palm kernel fractionated high melting point fraction of the extremely hydrogenated raw material of 7) was used as the blended oil for the randomly interesterified oil.

### Production Example 5

An oil and/or fat E was obtained in the same manner as in Production Example 2 except that a blended oil (a lauric acid content of 5.0% and a palmitic acid content/stearic acid content ratio of 3.1 in the blended oil) containing 66.5 wt. % of a palm fractionated high melting point fraction (iodine value of 31), 13.5 wt.% of an extremely hydrogenated palm oil, 11.2 wt.% of a palm kernel oil, 5.8 wt.% of an extremely hydrogenated rapeseed oil, 1.8 wt.% of a high-oleic sunflower oil, and 1.2 wt.% of a palm oil was used as the blended oil for the randomly interesterified oil.

### Production Example 6

An oil and/or fat F was obtained in the same manner as in Production Example 1 except that a blended oil (a lauric acid content of 5.0% and a palmitic acid content/stearic acid content ratio of 3.1 in the blended oil) containing 66.5 wt. % of a palm fractionated high melting point fraction (iodine value of 31), 13.5 wt.% of an extremely hydrogenated palm oil, 11.2 wt.% of a palm kernel oil, 5.8 wt.% of an extremely hydrogenated rapeseed oil, 1.8 wt.% of a high-oleic sunflower oil, and 1.2 wt.% of a palm oil was used as the blended oil for the randomly interesterified oil.

### Production Example 7

A blended oil (a lauric acid content of 5.0% and a palmitic acid content/stearic acid content ratio of 3.1 in the blended oil) containing 66.5 wt.% of a palm fractionated high melting point fraction (iodine value of 31), 13.5 wt.% of an extremely hydrogenated palm oil, 11.2 wt.% of a palm kernel oil, 5.8 wt.% of an extremely hydrogenated rapeseed oil, 1.8 wt.% of a high-oleic sunflower oil, and 1.2 wt.% of a palm oil was randomly interesterified using sodium methylate, and the resulting interesterified oil and/or fat was fractionated with hexane to remove a high melting point fraction. The resulting fractionated low melting point fraction was decolorized and deodorized according to a common method, and an oil and/or fat G was obtained.

### Production Example 8

A blended oil containing 24.5 wt.% of a palm fractionated low melting point fraction (iodine value of 67), 14.5 wt.% of an extremely hydrogenated palm oil, 45 wt.% of a palm kernel fractionated low melting point fraction (iodine value of 26), 13 wt.% of an extremely hydrogenated high-oleic sunflower oil (iodine value of 2), and 3 wt.% of a high-oleic sunflower oil was randomly interesterified using sodium methylate, and decolorized and deodorized by a common method, and an oil and/or fat H was obtained.

### Production Example 9

A palm kernel fractionated high melting point fraction (iodine value of 7) was extremely hydrogenated using a nickel catalyst until the iodine value was 2 or less, and decolorized and deodorized by a conventional method, and an oil and/or fat I was obtained.

### Production Example 10

An oil and/or fat J was obtained in the same manner as in Production Example 7 except that a blended oil (a lauric acid content of less than 1% and a palmitic acid content/stearic acid content ratio of 3.3 in the blended oil) containing 43 wt.% of a palm oil, 34 wt.% of a palm fractionated high melting point fraction (iodine value of 12), 12 wt.% of an extremely hydrogenated high-oleic sunflower oil (iodine value of 2), and 11 wt.% of a high-oleic sunflower oil was used as the blended oil for the randomly interesterified oil.

Tables 1 to 3 list the analytical values of the oils and/or fats of the production examples.

**[Table 1] Analytical values of oils and/or fats A to J (fatty acid composition %)**

| | Oil and/or fat A | Oil and/or fat B | Oil and/or fat C | Oil and/or fat D | Oil and/or fat E | Oil and/or fat F | Oil and/or fat G | Oil and/or fat H | Oil and/or fat I | Oil and/or fat J |
|---|---|---|---|---|---|---|---|---|---|---|
| C6:0 | 0.0 | 0.0 | 0.0 | 0.0 | 0.0 | 0.2 | 0.3 | 0.1 | 0.0 | 0.0 |
| C8:0 | 0.0 | 0.5 | 0.2 | 0.4 | 0.4 | 0.3 | 0.4 | 1.5 | 1.6 | 0.0 |
| C10:0 | 0.0 | 0.9 | 0.2 | 1.0 | 0.4 | 0.0 | 0.0 | 1.4 | 2.6 | 0.0 |
| C12:0 | 0.1 | 18.3 | 3.7 | 22.5 | 6.4 | 5.0 | 5.7 | 17.6 | 55.1 | 0.1 |
| C14:0 | 0.9 | 8.1 | 1.8 | 8.8 | 2.8 | 2.4 | 2.5 | 5.9 | 22.1 | 0.9 |
| C16:0 | 51.0 | 39.4 | 49.8 | 46.0 | 49.1 | 50.2 | 44.1 | 20.9 | 8.7 | 44.6 |
| C16:1 | 0.0 | 0.0 | 0.0 | 0.0 | 0.0 | 0.0 | 0.0 | 0.1 | 0.0 | 0.0 |
| C18:0 | 14.8 | 14.7 | 16.9 | 14.2 | 15.4 | 15.9 | 13.4 | 21.7 | 9.6 | 12.6 |
| C18:1t | 0.0 | 0.1 | 0.3 | 0.0 | 0.0 | 0.1 | 0.1 | 0.3 | 0.0 | 0.0 |
| C18:1c | 28.4 | 14.8 | 23.5 | 5.7 | 21.2 | 21.5 | 27.4 | 24.8 | 0.1 | 34.9 |
| C18:2t | 0.0 | 0.1 | 0.1 | 0.0 | 0.0 | 0.2 | 0.2 | 0.1 | 0.1 | 0.0 |
| C18:2c | 4.4 | 2.7 | 3.1 | 1.1 | 3.9 | 3.5 | 5.3 | 5.0 | 0.0 | 6.6 |
| C18:3t | 0.0 | 0.0 | 0.2 | 0.0 | 0.0 | 0.0 | 0.0 | 0.0 | 0.0 | 0.0 |
| C18:3c | 0.4 | 0.4 | 0.2 | 0.0 | 0.0 | 0.5 | 0.4 | 0.0 | 0.1 | 0.3 |
| C20:0 | 0.0 | 0.0 | 0.0 | 0.3 | 0.3 | 0.0 | 0.1 | 0.3 | 0.0 | 0.1 |
| C20:1 | 0.0 | 0.0 | 0.0 | 0.0 | 0.0 | 0.0 | 0.0 | 0.1 | 0.0 | 0.0 |
| C22:0 | 0.0 | 0.0 | 0.0 | 0.0 | 0.0 | 0.1 | 0.1 | 0.2 | 0.0 | 0.0 |
| Total | 100.0 | 100.0 | 100.0 | 100.0 | 100.0 | 100.0 | 100.0 | 100.0 | 100.0 | 100.0 |

| | | | | | | | | | | |
|---|---|---|---|---|---|---|---|---|---|---|
| • t represents a trans isomer. • c represents a cis isomer. | | | | | | | | | | |

**[Table 2] Analytical values of oils and/or fats A to J (triglyceride compositions (total number of carbons) % of oils and/or fats)**

| | Oil and/or fat A | Oil and/or fat B | Oil and/or fat C | Oil and/or fat D | Oil and/or fat E | Oil and/or fat F | Oil and/or fat G | Oil and/or fat H | Oil and/or fat I | Oil and/or fat J |
|---|---|---|---|---|---|---|---|---|---|---|
| CN24 | 0.0 | 0.0 | 0.0 | 0.0 | 0.0 | 0.0 | 0.0 | 0.4 | 0.0 | 0.0 |
| CN26 | 0.0 | 0.0 | 0.0 | 0.1 | 0.0 | 0.0 | 0.1 | 0.3 | 0.2 | 0.0 |
| CN28 | 0.0 | 0.2 | 0.0 | 0.2 | 0.0 | 0.0 | 0.1 | 0.4 | 0.2 | 0.0 |
| CN30 | 0.0 | 1.0 | 0.0 | 1.2 | 0.6 | 0.1 | 0.5 | 0.8 | 0.4 | 0.0 |
| CN32 | 0.0 | 0.9 | 0.0 | 1.0 | 0.5 | 0.1 | 0.5 | 2.2 | 3.2 | 0.7 |
| CN34 | 0.0 | 1.1 | 0.1 | 1.8 | 1.9 | 0.9 | 1.4 | 1.5 | 6.4 | 2.5 |
| CN36 | 0.0 | 2.6 | 0.1 | 2.4 | 2.6 | 1.0 | 2.7 | 3.8 | 26.4 | 1.7 |
| CN38 | 0.0 | 3.0 | 0.1 | 2.7 | 1.2 | 0.4 | 1.5 | 5.5 | 24.0 | 0.4 |
| CN40 | 0.0 | 8.3 | 0.7 | 11.2 | 2.2 | 1.6 | 1.8 | 5.2 | 14.8 | 0.0 |
| CN42 | 0.1 | 9.6 | 1.5 | 12.1 | 3.0 | 2.6 | 3.0 | 10.7 | 9.4 | 0.1 |
| CN44 | 0.3 | 13.8 | 6.9 | 21.2 | 9.3 | 9.3 | 7.6 | 9.5 | 5.4 | 0.2 |
| CN46 | 1.2 | 17.7 | 7.0 | 18.5 | 10.7 | 9.6 | 10.7 | 13.7 | 3.5 | 1.1 |
| CN48 | 9.9 | 13.7 | 9.7 | 11.3 | 11.2 | 10.9 | 10.8 | 18.0 | 2.8 | 7.9 |
| CN50 | 48.0 | 15.2 | 38.9 | 10.7 | 30.6 | 35.7 | 28.7 | 9.3 | 1.2 | 38.8 |
| CN52 | 32.4 | 10.2 | 28.5 | 4.9 | 21.5 | 22.9 | 24.2 | 10.8 | 1.1 | 35.2 |
| CN54 | 7.5 | 2.7 | 6.0 | 0.7 | 4.7 | 4.5 | 6.3 | 7.5 | 1.0 | 11.1 |
| CN56 | 0.6 | 0.0 | 0.5 | 0.0 | 0.1 | 0.3 | 0.2 | 0.2 | 0.0 | 0.4 |
| CN58 | 0.0 | 0.0 | 0.0 | 0.0 | 0.0 | 0.0 | 0.0 | 0.1 | 0.0 | 0.0 |
| CN60 | 0.0 | 0.0 | 0.0 | 0.0 | 0.0 | 0.0 | 0.0 | 0.0 | 0.0 | 0.0 |
| Total | 100.0 | 100.0 | 100.0 | 100.0 | 100.0 | 100.0 | 100.0 | 100.0 | 100.0 | 100.0 |

**[Table 3] Analytical values of oils and/or fats A to H and oil and/or fat J (triglyceride (TG) compositions (molecular species) % of oils and/or fats)**

| | | Oil and/or fat A | Oil and/or fat B | Oil and/or fat C | Oil and/or fat D | Oil and/or fat E | Oil and/or fat F | Oil and/or fat G | Oil and/or fat H | Oil and/or fat J |
|---|---|---|---|---|---|---|---|---|---|---|
| TG composition (molecular species) % of oil and/or fat | DGs | 2.6 | 12.4 | 2.1 | 10.4 | 7.1 | 3.6 | 20.9 | 30.3 | 6.2 |
| | P2O | 40.2 | 11.2 | 33,6 | 6.2 | 24.4 | 30.4 | 7.4 | 4.8 | 30.8 |
| | PPP | 6.2 | 5.6 | 7.3 | 7.6 | 6.9 | 7.1 | 0.1 | 4.7 | 4.5 |
| | PStO | 23.8 | 6.4 | 20.5 | 2.7 | 14.4 | 17.4 | 1.4 | 4.6 | 17.6 |
| | P2St | 4.2 | 3.0 | 3.3 | 3.7 | 3.5 | 3.5 | 0.0 | 2.7 | 3.1 |
| | St2O | 4.2 | 1.3 | 3.6 | 0.8 | 2.6 | 3.0 | 0.0 | 2.5 | 3.2 |
| | PSt2 | 1.3 | 1.0 | 1.0 | 1.3 | 1.0 | 1.0 | 0.1 | 2.0 | 0.9 |
| | StStSt | 0.4 | 0.0 | 0.0 | 0.0 | 0.0 | 0.3 | 0.0 | 0.7 | 0.3 |

| | | | | | | | | | | |
|---|---|---|---|---|---|---|---|---|---|---|
| · DGs represents diglycerides, provided that they may partially contain a triglyceride containing lauric acid. · P2O represents a triglyceride with two palmitic acids and one oleic acid attached. · PPP represents a triglyceride with three palmitic acids attached. · PStO represents a triglyceride with one palmitic acid, one stearic acid, and one oleic acid attached. · P2St represents a triglyceride with two palmitic acids and one stearic acid attached. · St2O represents a triglyceride with two stearic acids and one oleic acid attached. · PSt2 represents a triglyceride with one palmitic acid and two stearic acids attached. · StStSt represents a triglyceride with three stearic acids attached. | | | | | | | | | | |

The oils and/or fats of the production examples were blended according to the descriptions in Tables 4 and 5. Examples 1 to 11 of the oil and/or fat for chocolate products and Comparative Examples 1 to 6 of the oil and/or fat for chocolate products were obtained.

**[Table 4]**

| | Example 1 of oil and/or fat for chocolate products | Example 2 of oil and/or fat for chocolate products | Example 3 of oil and/or fat for chocolate products | Example 4 of oil and/or fat for chocolate products | Example 5 of oil and/or fat for chocolate products | Example 6 of oil and/or fat for chocolate products | Example 7 of oil and/or fat for chocolate products | Example 8 of oil and/or fat for chocolate products | Example 9 of oil and/or fat for chocolate products | Example 10 of oil and/or fat for chocolate products | Example 11 of oil and/or fat for chocolate products |
|---|---|---|---|---|---|---|---|---|---|---|---|
| Oil and/or fat A | 90 | 70 | - | 88 | 76 | 72 | 67 | 56 | - | - | - |
| Oil and/or fat B | 10 | 30 | - | - | - | - | - | - | - | - | - |
| Oil and/or fat C | - | - | 100 | - | - | - | - | - | - | - | - |
| Oil and/or fat D | - | - | - | 12 | 24 | 28 | 33 | 44 | - | - | - |
| Oil and/or fat E | - | - | - | - | - | - | - | - | 100 | - | - |
| Oil and/or fat F | - | - | - | - | - | - | - | - | - | 100 | - |
| Oil and/or fat G | - | - | - | - | - | - | - | - | - | - | 100 |

**[Table 5]**

| | Comparative Example 1 of oil and/or fat for chocolate products | Comparative Example 2 of oil andior fat for chocolate products | Comparative Example 3 of oil and/or fat for chocolate products | Comparative Example 4 of oil and/or fat for chocolate products | Comparative Example 5 of oil and/or fat for chocolate products | Comparative Example 6 of oil and/or fat for chocolate products |
|---|---|---|---|---|---|---|
| Oil and/or fat A | 100 | 90 | 95 | 34 | - | - |
| Oil and/or fat D | - | - | - | 66 | 100 | - |
| Oil and/or fat H | - | 10 | - | - | - | - |
| Oil and/or fat I | - | - | 5 | - | - | - |
| Oil and/or fat J | - | - | - | - | - | 100 |

### Analytical value of fatty acid composition

The fatty acid compositions of Examples 1 to 11 of the oil and/or fat for chocolate products and Comparative Examples 1 to 6 of the oil and/or fat for chocolate products were analyzed. The measurement results are listed in Tables 6 and 7. In addition, the measurement results were evaluated by numerical values of (A) to (E) below:
(A) a trans fatty acid in total constituent fatty acids is in an amount of 5 wt.% or less;
(B) a lauric acid content in total constituent fatty acids is from 1 to 13 wt.%;
(C) a fatty acid with a chain length of 16 or more carbons in the total constituent fatty acids is in an amount of 79 to 97 wt.%;
(D) a proportion of lauric acid in total saturated fatty acids is from 1 to 18 wt.%; and
(E) a proportion of an unsaturated fatty acid in the total constituent fatty acids is 15 wt.% or more.

**[Table 6]**

| | | Example 1 of oil and/or fat for chocolate products | Example 2 of oil and/or fat for chocolate products | Example 3 of oil and/or fat for chocolate products | Example 4 of oil and/or fat for chocolate products | Example 5 of oil and/or fat for chocolate products | Example 6 of oil and/or fat for chocolate products | Example 7 of oil and/or fat for chocolate products | Example 8 of oil and/or fat for chocolate products | Example 9 of oil and/or fat for chocolate products | Example 10 of oil and/or fat for chocolate products | Example 11 of oil and/or fat for chocolate products |
|---|---|---|---|---|---|---|---|---|---|---|---|---|
| Fatty acid composition % | C6:0 | 0.0 | 0.0 | 0.0 | 0.0 | 0.0 | 0.0 | 0.0 | 0.0 | 0.0 | 0.2 | 0.3 |
| | C8:0 | 0.1 | 0.2 | 0.2 | 0.0 | 0.1 | 0.1 | 0.1 | 0.2 | 0.4 | 0.3 | 0.4 |
| | C10:0 | 0.1 | 0.3 | 0.2 | 0.1 | 0.2 | 0.3 | 0.3 | 0.4 | 0.4 | 0.0 | 0.0 |
| | C12:0 | 1.9 | 5.6 | 3.7 | 2.8 | 5.5 | 6.4 | 7.5 | 10.0 | 6.4 | 5.0 | 5.7 |
| | C14:0 | 1.6 | 3.1 | 1.8 | 1.8 | 2.8 | 3.1 | 3.5 | 4.4 | 2.8 | 2.4 | 2.5 |
| | C16:0 | 49.8 | 47.5 | 49.8 | 50.4 | 49.8 | 49.6 | 49.4 | 48.8 | 49.1 | 50.2 | 44.1 |
| | C16:1 | 0.0 | 0.0 | 0.0 | 0.0 | 0.0 | 0.0 | 0.0 | 0.0 | 0.0 | 0.0 | 0.0 |
| | C18:0 | 14.8 | 14.8 | 16.9 | 14.7 | 14.7 | 14.6 | 14.6 | 14.5 | 15.4 | 15.9 | 13.4 |
| | C18:1t | 0.0 | 0.0 | 0.3 | 0.0 | 0.0 | 0.0 | 0.0 | 0.0 | 0.0 | 0.1 | 0.1 |
| | C18:1c | 27.0 | 24.3 | 23.5 | 25.7 | 23.0 | 22.0 | 20.9 | 18.4 | 21.2 | 21.5 | 27.4 |
| | C18:2t | 0.0 | 0.0 | 0.1 | 0.0 | 0.0 | 0.0 | 0.0 | 0.0 | 0.0 | 0.2 | 0.2 |
| | C18:2c | 4.2 | 3.9 | 3.1 | 4.0 | 3.6 | 3.5 | 3.3 | 2.9 | 3.9 | 3.5 | 5.3 |
| | C18:3t | 0.0 | 0.0 | 0.2 | 0.0 | 0.0 | 0.0 | 0.0 | 0.0 | 0.0 | 0.0 | 0.0 |
| | C18:3c | 0.4 | 0.4 | 0.2 | 0.4 | 0.3 | 0.3 | 0.3 | 0.2 | 0.0 | 0.5 | 0.4 |
| | C20:0 | 0.0 | 0.0 | 0.0 | 0.0 | 0.1 | 0.1 | 0.1 | 0.1 | 0.3 | 0.0 | 0.1 |
| | C20:1 | 0.0 | 0.0 | 0.0 | 0.0 | 0.0 | 0.0 | 0.0 | 0.0 | 0.0 | 0.0 | 0.0 |
| | C22:0 | 0.0 | 0.0 | 0.0 | 0.0 | 0.0 | 0.0 | 0.0 | 0.0 | 0.0 | 0.1 | 0.1 |
| | Total | 100.0 | 100.0 | 100.0 | 100.0 | 100.0 | 100.0 | 100.0 | 100.0 | 100.0 | 100.0 | 100.0 |
| Evaluation | Trans fatty acid | 0.0 | 0.1 | 0.6 | 0.0 | 0.0 | 0.0 | 0.0 | 0.0 | 0.0 | 0.3 | 0.3 |
| | Lauric acid content | 1.9 | 5.6 | 3.7 | 2.8 | 5.5 | 6.4 | 7.5 | 10.0 | 6.4 | 5.0 | 5.7 |
| | Fatty acid with a chain length of C16 or more | 96.3 | 91.0 | 94.1 | 95.2 | 91.4 | 90.1 | 88.5 | 85.1 | 90.0 | 92.1 | 91.1 |
| | Proportion of lauric acid in total saturated fatty acids | 2.8 | 7.8 | 5.1 | 4.0 | 7.5 | 8.6 | 9.9 | 12.7 | 8.6 | 6.6 | 8.6 |
| | Proportion of unsaturated fatty acid in total constituent fatty acids | 31.7 | 28.7 | 27.4 | 30.0 | 26.9 | 25.8 | 24.5 | 21.6 | 25.2 | 25.9 | 33.4 |

**[Table 7]**

| | | Comparative Example 1 of oil and/or fat for chocolate products | Comparative Example 2 of oil and/or fat for chocolate products | Comparative Example 3 of oil and/or fat for chocolate products | Comparative Example 4 of oil and/or fal for chocolate products | Comparative Example 5 of oil and/or fat for chocolate products | Comparative Example 6 of oil and/or fat for chocolate products |
|---|---|---|---|---|---|---|---|
| Fatty acid composition % | C6:0 | 0.0 | 0.0 | 0.0 | 0.0 | 0.0 | 0.0 |
| | C8:0 | 0.0 | 0.2 | 0.1 | 0.3 | 0.4 | 0.0 |
| | C10:0 | 0.0 | 0.1 | 0.1 | 0.7 | 1.0 | 0.0 |
| | C12:0 | 0.1 | 1.9 | 2.9 | 14.9 | 22.5 | 0.1 |
| | C14:0 | 0.9 | 1.4 | 2.0 | 6.1 | 8.8 | 0.9 |
| | C16:0 | 51.0 | 48.0 | 48.9 | 47.7 | 46.0 | 44.6 |
| | C16:1 | 0.0 | 0.0 | 0.0 | 0.0 | 0.0 | 0.0 |
| | C18:0 | 14.8 | 15.5 | 14.5 | 14.4 | 14.2 | 12.6 |
| | C18:1t | 0.0 | 0.0 | 0.0 | 0.0 | 0.0 | 0.0 |
| | C18:1c | 28.4 | 28.0 | 27.0 | 13.4 | 5.7 | 34.9 |
| | C18:2t | 0.0 | 0.0 | 0.0 | 0.0 | 0.0 | 0.0 |
| | C18:2c | 4.4 | 4.5 | 4.2 | 2.2 | 1.1 | 6.6 |
| | C18:3t | 0.0 | 0.0 | 0.0 | 0.0 | 0.0 | 0.0 |
| | C18:3c | 0.4 | 0.4 | 0.4 | 0.1 | 0.0 | 0.3 |
| | C20:0 | 0.0 | 0.0 | 0.0 | 0.2 | 0.3 | 0.1 |
| | C20:1 | 0.0 | 0.0 | 0.0 | 0.0 | 0.0 | 0.0 |
| | C22:0 | 0.0 | 0.0 | 0.0 | 0.0 | 0.0 | 0.0 |
| | Total | 100.0 | 100.0 | 100.0 | 100.0 | 100.0 | 100.0 |
| Evaluation | Trans fatty acid | 0.0 | 0.0 | 0.0 | 0.0 | 0.0 | 0.0 |
| | Lauric acid content | 0.1 | 1.9 | 2.9 | 14.9 | 22.5 | 0.1 |
| | Fatty acid with a chain length of C16 or more | 99.0 | 96.5 | 95.0 | 78.1 | 67.3 | 99.0 |
| | Proportion of lauric acid in total saturated fatty acids | 0.1 | 2.8 | 4.2 | 17.7 | 24.1 | 0.1 |
| | Proportion of unsaturated fatty acid in total constituent fatty acids | 33.2 | 32.9 | 31.6 | 15.8 | 6.8 | 41.7 |

### Discussions of Tables 6 and 7

- Examples 1 to 11 of the oil and/or fat for chocolate products and Comparative Examples 2 and 3 of the oil and/or fat for chocolate products satisfied all the numerical ranges of (A) to (E).
- Comparative Examples 1 and 6 of the oil and/or fat for chocolate products did not satisfy the numerical ranges of (B), (C), and (D).
- Comparative Example 4 of the oil and/or fat for chocolate products did not satisfy the numerical ranges of (B) and (C).
- Comparative Example 5 of the oil and/or fat for chocolate products did not satisfy the numerical ranges of (B), (C), (D), and (E).

### Analytical value of triglyceride composition (total number of carbons)

The triglyceride compositions (total number of carbons) of Examples 1 to 11 of the oil and/or fat for chocolate products and Comparative Examples 1 to 6 of the oil and/or fat for chocolate products were analyzed. The measurement results are listed in Tables 8 and 9. In addition, the measurement results were evaluated by numerical values of (F) below:
(F) a CN38 to CN46 triglyceride content in total triglycerides is from 6 to 37.5 wt.%,
where the "CN38 to CN46 triglyceride" represents a triglyceride having a total number of carbons of constituent fatty acids of 38 to 46 in the triglycerides in the oil and/or fat.

**[Table 8]**

| | | Example 1 of oil and/or fat for chocolate products | Example 2 of oil and/or fat for chocolate products | Example 3 of oil and/or fat for chocolate products | Example 4 of oil and/or fat for chocolate products | Example 5 of oil and/or fat for chocolate products | Example 6 of oil and/or fat for chocolate products | Example 7 of oil and/or fat for chocolate products | Example 8 of oil and/or fat for chocolate products | Example 9 of oil and/or fat for chocolate products | Example 10 of oil and/or fat for chocolate products | Example 11 of oil and/or fat for chocolate products |
|---|---|---|---|---|---|---|---|---|---|---|---|---|
| Triglyceride composition (total number of carbons) % of oil and/or fat | CN24 | 0.0 | 0.0 | 0.0 | 0.0 | 0.0 | 0.0 | 0.0 | 0.0 | 0.0 | 0.0 | 0.0 |
| | CN26 | 0.0 | 0.0 | 0.0 | 0.0 | 0.0 | 0.0 | 0.0 | 0.0 | 0.0 | 0.0 | 0.1 |
| | CN28 | 0.0 | 0.1 | 0.0 | 0.0 | 0.0 | 0.1 | 0.1 | 0.1 | 0.0 | 0.0 | 0.1 |
| | CN30 | 0.1 | 0.3 | 0.0 | 0.1 | 0.3 | 0.3 | 0.4 | 0.5 | 0.6 | 0.1 | 0.5 |
| | CN32 | 0.1 | 0.3 | 0.0 | 0.1 | 0.2 | 0.3 | 0.3 | 0.4 | 0.5 | 0.1 | 0.5 |
| | CN34 | 0.1 | 0.3 | 0.1 | 0.2 | 0.4 | 0.5 | 0.6 | 0.8 | 1.9 | 0.9 | 1.4 |
| | CN36 | 0.3 | 0.8 | 0.1 | 0.3 | 0.6 | 0.7 | 0.8 | 1.1 | 2.6 | 1.0 | 2.7 |
| | CN38 | 0.3 | 0.9 | 0.1 | 0.3 | 0.6 | 0.8 | 0.9 | 1.2 | 1.2 | 0.4 | 1.5 |
| | CN40 | 0.8 | 2.5 | 0.7 | 1.3 | 2.7 | 3.1 | 3.7 | 4.9 | 2.2 | 1.6 | 1.8 |
| | CN42 | 1.1 | 3.0 | 1.5 | 1.5 | 3.0 | 3.5 | 4.1 | 5.4 | 3.0 | 2.6 | 3.0 |
| | CN44 | 1.7 | 4.4 | 6.9 | 2.8 | 5.3 | 6.2 | 7.2 | 9.5 | 9.3 | 9.3 | 7.6 |
| | CN46 | 2.9 | 6.2 | 7.0 | 3.3 | 5.4 | 6.0 | 6.9 | 8.8 | 10.7 | 9.6 | 10.7 |
| | CN48 | 10.3 | 11.0 | 9.7 | 10.1 | 10.2 | 10.3 | 10.4 | 10.5 | 11.2 | 10.9 | 10.8 |
| | CN50 | 44.7 | 38.2 | 38.9 | 43.5 | 39.0 | 37.6 | 35.7 | 31.6 | 30.6 | 35.7 | 28.7 |
| | CN52 | 30.2 | 25.7 | 28.5 | 29.1 | 25.8 | 24.7 | 23.3 | 20.3 | 21.5 | 22.9 | 24.2 |
| | CN54 | 7.0 | 6.1 | 6.0 | 6.7 | 5.9 | 5.6 | 5.3 | 4.5 | 4.7 | 4.5 | 6.3 |
| | CN56 | 0.5 | 0.4 | 0.5 | 0.5 | 0.5 | 0.4 | 0.4 | D.3 | 0.1 | 0.3 | 0.2 |
| | CN58 | 0.0 | 0.0 | 0.0 | 0.0 | 0.0 | 0.0 | 0.0 | 0.0 | 0.0 | 0.0 | 0.0 |
| | CN60 | 0.0 | 0.0 | 0.0 | 0.0 | 0.0 | 0.0 | 0.0 | 0.0 | 0.0 | 0.0 | 0.0 |
| | Total | 100.0 | 100.0 | 100.0 | 100.0 | 100.0 | 100.0 | 100.0 | 100.0 | 100.0 | 100.0 | 100.0 |
| Evaluation | CN38 to CN46 triglyceride content | 6.7 | 16.8 | 16.2 | 9.3 | 17.0 | 19.5 | 22.8 | 29.8 | 26.3 | 23.5 | 24.5 |

**[Table 9]**

| | | Comparaive Example 1 of oil and/or fat for chocolate products | Comparative Example 2 of oil and/or fat for chocolate products | Comparative Example 3 of oil and/or fat for chocolate products | Comparative Example 4 of oil and/or fat for chocolate products | Comparative Example 5 of oil and/or fat for chocolate products | Comparalive Example 6 of oil and/or fat for chocolate products |
|---|---|---|---|---|---|---|---|
| Triglyceride composition (total number of carbons) % of oil and/or fat | CN24 | 0.0 | 0.0 | 0.0 | 0.0 | 0.0 | 0.0 |
| | CN26 | 0.0 | 0.0 | 0.0 | 0.1 | 0.1 | 0.0 |
| | CN28 | 0.0 | 0.0 | 0.0 | 0.1 | 0.2 | 0.0 |
| | CN30 | 0.0 | 0.1 | 0.0 | 0.8 | 1.2 | 0.0 |
| | CN32 | 0.0 | 0.2 | 0.2 | 0.7 | 1.0 | 0.7 |
| | CN34 | 0.0 | 0.2 | 0.3 | 1.2 | 1.8 | 2.5 |
| | CN36 | 0.0 | 0.4 | 1.3 | 1.6 | 2.4 | 1.7 |
| | CN38 | 0.0 | 0.6 | 1.2 | 1.8 | 2.7 | 0.4 |
| | CN40 | 0.0 | 0.5 | 0.7 | 7.4 | 11.2 | 0.0 |
| | CN42 | 0.1 | 1.2 | 0.6 | 8.0 | 12.1 | 0.1 |
| | CN44 | 0.3 | 1.2 | 0.6 | 14.1 | 21.2 | 0.2 |
| | CN46 | 1.2 | 2.5 | 1.3 | 12.6 | 18.5 | 1.1 |
| | CN48 | 9.9 | 10.7 | 9.5 | 10.8 | 11.3 | 7.9 |
| | CN50 | 48.0 | 44.1 | 45.7 | 23.4 | 10.7 | 38.8 |
| | CN52 | 32.4 | 30.2 | 30.8 | 14.3 | 4.9 | 35.2 |
| | CN54 | 7.5 | 7.5 | 7.2 | 3.0 | 0.7 | 11.1 |
| | CN56 | 0.6 | 0.6 | 0.6 | 0.2 | 0.0 | 0.4 |
| | CN58 | 0.0 | 0.0 | 0.0 | 0.0 | 0.0 | 0.0 |
| | CN60 | 0.0 | 0.0 | 0.0 | 0.0 | 0.0 | 0.0 |
| | Total | 100.0 | 100.0 | 100.0 | 100.0 | 100.0 | 100.0 |
| Evaluation | CN38 to CN46 triglyceride content | 1.6 | 5.9 | 4.4 | 43.9 | 65.7 | 1.8 |

### Discussion of Tables 8 and 9

- Examples 1 to 11 of the oil and/or fat for chocolate products satisfied the numerical range of (F).
- Comparative Examples 1 to 6 of the oil and/or fat for chocolate products did not satisfy the numerical range of (F).

### Analytical value of triglyceride composition (molecular species)

The triglyceride compositions (molecular species) of Examples 1 to 11 of the oil and/or fat for chocolate products and Comparative Examples 1 to 6 of the oil and/or fat for chocolate products were analyzed. The measurement results are listed in Tables 10 and 11. In addition, the measurement results were evaluated by numerical values of (G) to (H) below:
(G) a proportion of S2O in the total triglycerides is from 35 to 75 wt.%; and
(H) a proportion of SSS in the total triglycerides is from 5 to 15 wt.%,
where S represents a saturated fatty acid having from 16 to 20 carbons, O represents oleic acid, S2O represents a triglyceride with two S's and one O bonded, and SSS represents a triglyceride with three S's bonded.

**[Table 10]**

| | | Example 1 of oil and/or fat for chocolate products | Example 2 of oil and/or fat for chocolate products | Example 3 of oil and/or fat for chocolate products | Example 4 of oil and/or fat for chocolate products | Example 5 of oil and/or fat for chocolate products | Example 6 of oil and/or fat for chocolate products | Example 7 of oil and/or fat for chocolate products | Example 8 of oil and/or fat for chocolate products | Example 9 of oil and/or fat for chocolate products | Example 10 of oil and/or fat for chocolate products | Example 11 of oil and/or fat for chocolate products |
|---|---|---|---|---|---|---|---|---|---|---|---|---|
| TG composition (molecular species) % of oil and/or fat | DGs | 3.6 | 5.5 | 2.1 | 3.6 | 4.5 | 4.8 | 5.2 | 6.0 | 7.1 | 3.6 | 8.8 |
| | PZO | 37.3 | 31.5 | 33.6 | 36.1 | 32.0 | 30.7 | 29.0 | 25.2 | 24.4 | 30.4 | 23.5 |
| | PPP | 6.2 | 6.1 | 7.3 | 6.4 | 6.6 | 6.6 | 6.7 | 6.8 | 6.9 | 7.1 | 5.0 |
| | PStO | 22.0 | 18.6 | 20.5 | 21.3 | 18.7 | 17.9 | 16.8 | 14.5 | 14.4 | 17.4 | 12.6 |
| | P2St | 4.1 | 3.9 | 3.3 | 4.2 | 4.1 | 4.1 | 4.0 | 4.0 | 3.5 | 3.5 | 2.5 |
| | St2O | 3.9 | 3.3 | 3.6 | 3.8 | 3.4 | 3.3 | 3.1 | 2.7 | 2.6 | 3.0 | 2.1 |
| | PSt2 | 1.3 | 1.2 | 1.0 | 1.3 | 1.3 | 1.3 | 1.3 | 1.3 | 1.0 | 1.0 | 0.7 |
| | StStSt | 0.4 | 0.3 | 0.0 | 0.4 | 0.3 | 0.3 | 0.3 | 0.2 | 0.0 | 0.3 | 0.2 |
| Evaluation | S2O | 63.3 | 53.4 | 57.7 | 61.2 | 54.2 | 51.8 | 48.9 | 42.5 | 41.4 | 50.8 | 38.2 |
| | SSS | 11.9 | 11.4 | 11.6 | 12.2 | 12.3 | 12.3 | 12.3 | 12.3 | 11.4 | 11.9 | 8.4 |

**[Table 11]**

| | | Comparative Example 1 of oil and/or fat for chocolate products | Comparative Example 2 of oil and/or fat for chocolate products | Comparative Exampie 3 of oil and/or fat for chocolate products | Comparative Example 4 of oil and/or fat for chocolate products | Comparative Example 5 of oil and/or fat for chocolate products | Comparative Example 6 of oil and/or fat for chocolate products |
|---|---|---|---|---|---|---|---|
| TG composition (molecular species) % of oil and/or fat | DGs | 2.6 | 5.4 | 7.3 | 7.7 | 10.4 | 6.2 |
| | P2O | 40.2 | 36.7 | 38.2 | 17.8 | 6.2 | 30.8 |
| | PPP | 6.2 | 6.1 | 5.9 | 7.1 | 7.6 | 4.5 |
| | PStO | 23.8 | 21.9 | 22.6 | 9.9 | 2.7 | 17.6 |
| | P2St | 4.2 | 4.1 | 4.1 | 3.9 | 3.7 | 3.1 |
| | St2O | 4.2 | 4.1 | 4.0 | 1.9 | 0.8 | 3.2 |
| | PSt2 | 1.3 | 1.4 | 1.3 | 1.3 | 1.3 | 0.9 |
| | StStSt | 0.4 | 0.4 | 0.4 | 0.1 | 0.0 | 0.3 |
| Evaluation | S2O | 68.2 | 62.6 | 64.8 | 29.6 | 9.7 | 51.6 |
| | SSS | 12.2 | 12.0 | 11.7 | 12.4 | 12.5 | 8.8 |

### Discussion of Tables 10 and 11

- Examples 1 to 11 of the oil and/or fat for chocolate products and Comparative Examples 1 to 3 and 6 of the oil and/or fat for chocolate products satisfied the numerical ranges of (G) and (H).
- Comparative Examples 4 and 5 of the oil and/or fat for chocolate products did not satisfy the numerical range of (G).

### Analytical value of SFC

SFCs of Examples 1 to 11 of the oil and/or fat for chocolate products and Comparative Examples 1 to 6 of the oil and/or fat for chocolate products were analyzed. The measurement results are listed in Tables 12 and 13. In addition, the measurement results were evaluated by numerical values of (I), (J), and (K) below:
(I) SFC at 10°C is 80% or more;
(J) SFC at 20°C is from 55% to 95%; and
(K) SFC at 40°C is 8% or less.

**[Table 12] SFC %**

| | Example 1 of oil and/or fat for chocolate products | Example 2 of oil and/or fat for chocolate products | Example 3 of oil and/or fat for chocolate products | Example 4 of oil and/or fat for chocolate products | Example 5 of oil and/or fat for chocolate products | Example 6 of oil and/or fat for chocolate products | Example 7 of oil and/or fat for chocolate products | Example 8 of oil and/or fat for chocolate products | Example 9 of oil and/or fat for chocolate products | Example 10 of oil and/or fat for chocolate products | Example 11 of oil and/or fat for chocolate products |
|---|---|---|---|---|---|---|---|---|---|---|---|
| 10'C | 91.6 | 93.8 | 91.0 | 92.7 | 94.2 | 94.5 | 94.7 | 95.2 | 92.3 | 92.5 | 88.6 |
| 20°C | 79.1 | 82.3 | 88.0 | 82.0 | 85.3 | 86.2 | 87.4 | 89.6 | 84.7 | 87.8 | 66.1 |
| 25°C | 59.0 | 59.8 | 74.0 | 62.8 | 66.9 | 68.4 | 69.6 | 73.2 | 67.2 | 74.7 | 46.2 |
| 30°C | 33.8 | 34.9 | 48.0 | 36.8 | 41.2 | 42.7 | 44.9 | 49.8 | 42.7 | 47.4 | 26.4 |
| 35°C | 17.1 | 17.1 | 22.0 | 18.6 | 20.4 | 21.6 | 21.6 | 25.8 | 21.5 | 23.4 | 11.2 |
| 40°C | 5.3 | 4.7 | 7.0 | 5.9 | 6.1 | 6.4 | 6.3 | 7.3 | 6.4 | 7.8 | 1.8 |

**[Table 13] SFC %**

| | Comparative Example 1 of oil and/or fat for chocolate products | Comparative Example 2 of oil and/or fat for chocolate products | Comparative Example 3 of oil and/or fat for chocolate products | Comparative Example 4 of oil and/or fat for chocolate products | Comparative Example 5 of oil and/or fat for chocolate products | Comparative Example 6 of oil and/or fat for chocolate products |
|---|---|---|---|---|---|---|
| 10°C | 90.1 | 91.3 | 91.0 | 96.3 | 97.5 | 68.8 |
| 20°C | 76.1 | 77.1 | 81.1 | 94.3 | 97.0 | 48.5 |
| 25°C | 56.8 | 54.8 | 57.8 | 81.7 | 95.7 | 29.9 |
| 30°C | 32.8 | 32.1 | 33.3 | 60.4 | 78.2 | 16.9 |
| 35°C | 16.8 | 16.3 | 17.0 | 33.7 | 50.9 | 8.8 |
| 40°C | 5.5 | 5.0 | 5.7 | 8.8 | 14.4 | 1.3 |

### Discussions of Tables 12 and 13

- Examples 1 to 11 of the oil and/or fat for chocolate products and Comparative Examples 1 to 3 of the oil and/or fat for chocolate products satisfied the numerical ranges of (I), (J), and (K).
- Comparative Example 4 of the oil and/or fat for chocolate products did not satisfy the numerical range of (K).
- Comparative Example 5 of the oil and/or fat for chocolate products did not satisfy the numerical ranges of (J) and (K).
- Comparative Example 6 of the oil and/or fat for chocolate products did not satisfy the numerical ranges of (I) and (J).

### Evaluation 1 of oil and/or fat for chocolate products by chocolate product test

Examples 1 to 3 and 9 of the oil and/or fat for chocolate products and Comparative Examples 1 to 3 of the oil and/or fat for chocolate products prepared above were used for evaluation by a chocolate product test.

Chocolate products (Examples 1 to 3 of chocolate products and Comparative Examples 1 to 3 of chocolate products) were prepared according to the formulations in Table 14 using the oil and/or fat for chocolate products in a vegetable oil and/or fat material. In each formulation, the total amount of components other than food additives were designated 100%, and the amount of food additives were added thereto.

Among the blended raw materials, the whole milk powder contains 26% of milk fat, and the cocoa mass contains 55% of cocoa butter. Thus, the oil content in the present chocolate products is calculated as 40.5%, and the contents of cocoa butter, milk fat, and vegetable oil and/or fat in the oil content are calculated as 20%, 15%, and 65%, respectively.

The prepared chocolate products were each completely melted, cooled to 45°C, then poured into an aluminum cup, cooled at 5°C for 30 minutes, and subjected to sensory evaluation (hardness, flavor development, and melt in the mouth) and bloom resistance test according to the evaluation criteria below.

**[Table 14] Chocolate product test 1**

| | | Example 1 of chocolate product | Example 2 of chocolate product | Example 3 of chocolate product | Example 4 of chocolate product | Comparative Example 1 of chocolate product | Comparative Example 2 of chocolate product | Comparative Example 3 of chocolate product |
|---|---|---|---|---|---|---|---|---|
| Sugar | | 35.4 | | | | | | |
| Plant oil and/or fat | Example 1 of oil and/or fat for chocolate products | 26.4 | - | - | - | - | - | - |
| | Example 2 of oil and/or fat for chocolate products | - | 26.4 | - | - | - | - | - |
| | Example 3 of oil and/or fat for chocolate products | - | - | 26.4 | - | - | - | - |
| | Example 9 of oil and/or fat for chocolate products | - | - | - | 26.4 | - | - | - |
| | Comparative Example 1 of oil and/or fat for chocolate products | - | - | - | - | 26.4 | - | - |
| | Comparative Example 2 of oil and/or fat for chocolate products | - | - | - | - | - | 26.4 | - |
| | Comparative Example 3 of oil and/or fat for chocolate products | - | - | - | - | - | - | 26.4 |
| Whole milk powder | | 23.1 | | | | | | |
| Cocoa mass | | 15.1 | | | | | | |
| Lecithin | | 0.4 | | | | | | |
| Vanillin | | 0.1 | | | | | | |

### Evaluation criteria for hardness

Criterion for acceptance was set at 3 or more.
- 5: Harder and thus better than Comparative Example 1 of the chocolate product.
- 4: Slightly harder and thus slightly better than Comparative Example 1 of the chocolate product.
- 3: Hardness is equivalent to that of Comparative Example 1 of the chocolate product.
- 2: Slightly softer and thus slightly poorer than Comparative Example 1 of the chocolate product.
- 1: Slightly softer and thus poorer than Comparative Example 1 of the chocolate product.

### Evaluation criteria for flavor development

Criterion for acceptance was set at 3 or more.
- 5: Flavor development is stronger and thus better than Comparative Example 1 of the chocolate product.
- 4: Flavor development is slightly stronger and thus slightly better than Comparative Example 1 of the chocolate product.
- 3: Flavor development strength is equivalent to that of Comparative Example 1 of the chocolate product.
- 2: Flavor development is slightly weaker and thus slightly poorer than Comparative Example 1 of the chocolate product.
- 1: Flavor development is weaker and thus poorer than Comparative Example 1 of the chocolate product.

### Evaluation criteria for melt in mouth

Criterion for acceptance was set at 3 or more.
- 5: Melt in the mouth is faster and thus better than Comparative Example 1 of the chocolate product.
- 4: Melt in the mouth is slightly faster and thus slightly better than Comparative Example 1 of the chocolate product.
- 3: Melt in the mouth is equivalent to that of Comparative Example 1 of the chocolate product.
- 2: Melt in the mouth is slightly slower and thus slightly poorer than Comparative Example 1 of the chocolate product.
- 1: Melt in the mouth is slower and thus poorer than Comparative Example 1 of the chocolate product.

### Bloom resistance test

The occurrence of bloom on the chocolate surface over time was observed under the following conditions.
- Constant at 17°C
- Constant at 20°C
- Constant at 25°C
- 17°C/28°C Cycle: cycle conditions of alternating between 17°C and 28°C in one day (17°C for 8 hours, increasing the temperature for 4 hours, 28°C for 8 hours, and lowering the temperature for 4 hours)
- 17°C/30.5°C Cycle: cycle conditions of alternating between 17°C and 30.5°C in one day (17°C for 8 hours, increasing the temperature for 4 hours, 30.5°C for 8 hours, and lowering the temperature for 4 hours)

### Evaluation criteria for bloom

Criterion for acceptance was set at 2 or more.
- 5: No loss of gloss is observed.
- 4: Very slight loss of gloss is observed.
- 3: Slight loss of gloss is observed.
- 2: Apparent loss of gloss is observed.
- 1: Bloom development is observed.

**[Table 15] Evaluation results of chocolate product test 1**

| | | | Example 1 of chocolate product | Example 2 of chocolate product | Example 3 of chocolate product | Example 4 of chocolate product | Comparative Example 1 of chocolate product | Comparative Example 2 of chocolate product | Comparative Example 3 of chocolate product |
|---|---|---|---|---|---|---|---|---|---|
| Sensory evaluation | | Hardness | 4 | 4 | 5 | 4 | 3 | 2 | 1 |
| | | Flavor development | 5 | 4 | 4 | 4 | 3 | 4 | 4 |
| | | Melt in the mouth | 5 | 4 | 4 | 3 | 3 | 3 | 3 |
| Bloom resistance test | 17°C constant storage | 3 weeks | 5 | 5 | 5 | 5 | 4 | 5 | 5 |
| | | 6 weeks | 5 | 4 | 5 | 5 | 3 | 5 | 5 |
| | 20°C constant storage | 3 weeks | 5 | 5 | 5 | 5 | 4 | 5 | 5 |
| | | 6 weeks | 5 | 5 | 5 | 5 | 4 | 5 | 5 |
| | 25°C constant storage | 3 weeks | 5 | 5 | 5 | 5 | 4 | 5 | 5 |
| | | 6 weeks | 5 | 4 | 4 | 5 | 3 | 5 | 4 |
| | 17°C/28°C cycle storage | 3 weeks | 5 | 5 | 5 | 5 | 2 | 5 | 5 |
| | | 6 weeks | 5 | 5 | 5 | 5 | 1 | 2 | 1 |
| | 17°C/30.5°C cycle storage | 3 weeks | 5 | 5 | 5 | 5 | 2 | 5 | 5 |
| | | 6 weeks | 5 | 3 | 5 | 5 | 1 | 5 | 5 |

- Examples 1 to 4 of the chocolate products were all acceptable for hardness, flavor development, and melt in the mouth, and did not develop bloom at all the storage temperatures during 6 weeks.
- Comparative Examples 1 to 3 of the chocolate products were unacceptable for one or more of hardness, flavor development, and melt in the mouth, or bloom occurred in one or more cycle storage tests during the storage for 6 weeks.
- Examples 1 to 4 of the chocolate products all showed a delay in the time until loss of gloss was observed as compared with Comparative Example 1 of the chocolate product in the constant storages at 17°C, 20°C, and 25°C, confirming the improvement in the compatibility with cocoa butter in Examples 1 to 4 of the chocolate products over Comparative Example 1 of the chocolate product, which is an existing technology. In addition, likewise, bloom did not develop in the 17°C/28°C cycle storage and the 17°C/30.5°C cycle storage, confirming the improvement in the bloom resistance under the cycle conditions in the medium to high temperature range.

### Evaluation 2 of oil and/or fat for chocolate products by chocolate product test

Chocolate products were prepared according to Table 16 using Examples 4 to 8 of the oil and/or fat for chocolate products and Comparative Examples 1, 4 and 5 of the oil and/or fat for chocolate products prepared above and evaluated in the same manner as in chocolate product test 1. Among the blended raw materials, the cocoa powder contains 11% of cocoa butter, and the cocoa mass contains 55% of cocoa butter. Thus, the oil content in the present chocolate products is calculated as 40%, and the contents of cocoa butter and vegetable oil and/or fat in the oil content are calculated as 20% and 80%, respectively.

**[Table 16] Chocolate product test 2**

| | | Example 5 of chocolate product | Example 6 of chocolate product | Example 7 of chocolate product | Example 8of chocolate product | Example 9 of chocolate product | Comparative Example 4 of chocolate product | Comparative Example 5 of chocolate product | Comparative Example 6 of chocolate product |
|---|---|---|---|---|---|---|---|---|---|
| Sugar | | 44.0 | | | | | | | |
| Plant oil and/or fat | Example 4 of oil and/or fat for chocolate products | 32.0 | - | - | - | - | - | - | - |
| | Example 5 of oil and/or fat for chocolate products | - | 32.0 | - | - | - | - | - | - |
| | Example 6 of oil and/or fat for chocolate products | - | - | 32.0 | - | - | - | - | - |
| | Example 7 of oil and/or fat for chocolate products | - | - | - | 32.0 | - | - | - | - |
| | Example 8 of oil and/or fat for chocolate products | - | - | - | - | 32.0 | - | - | - |
| | Comparative Example 1 of oil and/or fat for chocolate products | - | - | - | - | - | 32.0 | - | - |
| | Comparative Example 4 of oil and/or fat for chocolate products | - | - | - | - | - | - | 32.0 | - |
| | Comparative Example 5 of oil and/or fat for chocolate products | - | - | - | - | - | - | - | 32.0 |
| Cocoa powder | | 16.0 | | | | | | | |
| Cocoa butter | | 4.0 | | | | | | | |
| Cocoa mass | | 4.0 | | | | | | | |
| Lecithin | | 0.4 | | | | | | | |
| Vanillin | | 0.1 | | | | | | | |

**[Table 17] Evaluation results of chocolate product test 2**

| | | Example 5 of chocolate product | Example 6 of chocolate product | Example 7 of chocolate product | Example 8 of chocolate product | Example 9 of chocolate product | Comparative Example 4 of chocolate product | Comparative Example 5 of chocolate product | Comparative Example 6 of chocolate product |
|---|---|---|---|---|---|---|---|---|---|
| 17°C constant storage | 3 weeks | 5 | 5 | 5 | 5 | 5 | 5 | 5 | 2 |
| | 6 weeks | 5 | 5 | 5 | 5 | 5 | 5 | 5 | 1 |
| | 9 weeks | 5 | 5 | 5 | 5 | 5 | 5 | 5 | 1 |
| 20°C constant storage | 3 weeks | 5 | 5 | 5 | 5 | 5 | 5 | 5 | 2 |
| | 6 weeks | 5 | 5 | 5 | 5 | 5 | 5 | 3 | 1 |
| | 9 weeks | 5 | 5 | 5 | 5 | 5 | 5 | 2 | 1 |
| 25°C constant storage | 3 weeks | 5 | 5 | 5 | 5 | 5 | 5 | 5 | 5 |
| | 6 weeks | 5 | 5 | 5 | 5 | 5 | 5 | 5 | 5 |
| | 9 weeks | 5 | 5 | 5 | 5 | 5 | 2 | 5 | 5 |
| 17°C/28°C cycle storage | 3 weeks | 5 | 5 | 5 | 5 | 5 | 4 | 5 | 5 |
| | 6 weeks | 5 | 5 | 5 | 5 | 5 | 4 | 5 | 5 |
| | 9 weeks | 5 | 5 | 5 | 5 | 5 | 2 | 5 | 5 |
| 17°C/30.5°C cycle storage | 3 weeks | 5 | 5 | 5 | 5 | 5 | 5 | 5 | 5 |
| | 6 weeks | 5 | 5 | 5 | 5 | 5 | 5 | 5 | 3 |
| | 9 weeks | 5 | 5 | 5 | 5 | 5 | 5 | 5 | 2 |

- Examples 5 to 9 of the chocolate products all did not develop bloom at all the storage temperatures during the storage for 9 weeks.
- Comparative Examples 4 to 6 of the chocolate products developed bloom at all the storage temperatures during the storage for 9 weeks.

### Evaluation 3 of oil and/or fat for chocolate products by chocolate product test

Chocolate products were prepared according to Table 18 using Examples 10 and 11 of the oil and/or fat for chocolate products and Comparative Examples 1 and 6 of the oil and/or fat for chocolate products prepared above and evaluated in the same manner as in chocolate product test 1. From the oil contents of the whole milk powder, cocoa powder, and cocoa mass described above, the oil content in the present chocolate products is calculated as 42.4%, and the contents of cocoa butter, milk fat, and vegetable oil and/or fat in the oil content are calculated as 20%, 5%, and 75%, respectively.

**[Table 18]**

| | | Example 10 of chocolate product | Example 11 of chocolate product | Comparative Example 7 of chocolate product | Comparative Example 8 of chocolate product |
|---|---|---|---|---|---|
| Sugar | | 41.2 | | | |
| Cocoa mass | | 8.8 | | | |
| Cocoa powder | | 8.8 | | | |
| Cocoa butter | | 2.5 | | | |
| Plant oil and/or fat | Example 10 of oil and/or fat for chocolate products | 31.4 | - | | |
| | Example 11 of oil and/or fat for chocolate products | - | 31.4 | - | - |
| | Comparative Example 1 of oil and/or fat for chocolate products | - | - | 31.4 | - |
| | Comparative Example 6 of oil and/or fat for chocolate products | - | - | - | 31.4 |
| Whole milk powder | | 7.3 | | | |
| Lecithin | | 0.5 | | | |
| Vanillin | | 0.5 | | | |

**[Table 19]**

| | | Example 10 of chocolate product | Example 11 of chocolate product | Comparative Example7 of chocolate product | Comparative Example8 of chocolate product |
|---|---|---|---|---|---|
| 20°C constant storage | 4 weeks | 5 | 5 | 5 | 5 |
| | 7 weeks | 5 | 4 | 5 | 5 |
| | 13 weeks | 5 | 2 | 5 | 4 |
| 11°C/28°C cycle storage | 4 weeks | 5 | 5 | 5 | 4 |
| | 7 weeks | 5 | 5 | 2 | 3 |
| | 13 weeks | 5 | 5 | 1 | 1 |

- Examples 10 and 11 of the chocolate products all did not develop bloom at all the storage temperatures during the storage for 13 weeks.
- Comparative Examples 7 and 8 of the chocolate products developed bloom during the 17°C/28°C cycle storage for 13 weeks.

### Investigation of mechanism for enhancement of bloom resistance by model experiment

To investigate the reason for the enhanced cycle bloom resistance when an embodiment of the present invention was used in the chocolate products, the formulations listed in Table 20 were prepared. For the cocoa butter, "Cocoa Butter 201" available from Fuji Oil Co., Ltd. was used.

**[Table 20]**

| | | Model Example 1 | Model Example 2 | Model Comparative Example 1 | Model Comparative Example 2 |
|---|---|---|---|---|---|
| Formulation % | Oil and/or fat C | 100 | 80 | - | - |
| | Oil and/or fat A | - | - | 100 | 80 |
| | Cocoa butter | 0 | 20 | 0 | 20 |

### Crystal form analysis by model storage test

Small amounts of samples of Model Examples 1 and 2 and Model Comparative Examples 1 and 2 were each applied to a glass plate for an X-ray diffractometer, then solidified, and held at 20°C for 1 week. Then, the samples were stored under 17°C/28°C cycle conditions, and the crystal form of each sample was measured with an X-ray diffractometer at regular intervals. For the measurement, an X-ray diffraction image of the sample was measured using an X-ray diffractometer RIGAKU MiniFlex II (available from Rigaku Corporation, a maximum rated power of 450 W, a rated voltage of 30 kV, and a rated current of 15 mA) under conditions of a 2θ/θ coupled scan mode, a divergence slit of 1.25°, a light receiving slit of 0.3 mm, a light scattering slit of 1.25°, a monochrome light receiving slit of 0.8 mm, a start angle of 2.1°, and an end angle of 30.0°. The obtained X-ray diffraction image was analyzed, and a "ratio of the β-form crystal amount/the β'-form crystal amount" was calculated from the peak intensities of the β'-form crystal (4.2 Å) and the β-form crystal (4.6 Å) of the oil and/or fat sample.

**[Table 21]**

| Ratio of β-form crystal amount/β'-form crystal amount | Model Example 1 | Model Example 2 | Model Comparative Example 1 | Model Comparative Example 2 |
|---|---|---|---|---|
| 17°C/28°C cycle storage day 1 | 0.000 | 0.000 | 0.000 | 0.047 |
| 17°C/28°C cycle storage day 2 | 0.000 | 0.052 | 0.078 | 0.080 |
| 17°C/28°C cycle storage day 8 | 0.041 | 0.038 | 0.100 | 0.050 |
| 17°C/28°C cycle storage day 15 | 0.042 | 0.000 | 0.116 | 0.060 |
| 17°C/28°C cycle storage day 22 | 0.000 | 0.000 | 0.093 | 0.080 |
| 17°C/28°C cycle storage day 30 | 0.000 | 0.047 | 0.100 | 0.040 |
| 17°C128°C cycle storage day 51 | 0.042 | 0.034 | 0.214 | 0.260 |
| 17°C/28°C cycle storage day 63 | 0.055 | 0.066 | 0.290 | 0.540 |

The present results showed that Model Examples 1 and 2 tended to have a low ratio of the β-form crystal amount/the β'-form crystal amount kept over time as compared with Model Comparative Examples 1 and 2, confirming that using the oil and/or fat for chocolate products according to an embodiment of the present invention suppresses the crystal transition to the β-form.

### Industrial Applicability

Embodiments of the present invention can provide oils and/or fats for chocolate products having good melt in the mouth, strong flavor development, and good bloom resistance, and the oils and/or fats can be suitably used in oil-based foods produced using these oils and/or fats, particularly in chocolate products not subjected to a tempering operation.

## Claims

1. An oil and/or fat for chocolate products, satisfying all of (a) to (d) below:
(a) a trans fatty acid in total constituent fatty acids is in an amount of 5 wt.% or less;
(b) a lauric acid content in the total constituent fatty acids is from 1 to 13 wt.%;
(c) a fatty acid with a chain length of 16 or more carbons in the total constituent fatty acids is in an amount of 79 to 97 wt.%; and
(d) a CN38 to CN46 triglyceride content in total triglycerides is from 6 to 37.5 wt.%,
where the "CN38 to CN46 triglyceride" represents a triglyceride having a total number of carbons of constituent fatty acids of 38 to 46 in the triglycerides in the oil and/or fat.

2. The oil and/or fat for chocolate products according to claim 1, satisfying both (e) and (f) below:
(e) a proportion of S2O in the total triglycerides is from 35 to 75 wt.%; and
(f) a proportion of SSS in the total triglycerides is from 5 to 15 wt.%,
where S represents a saturated fatty acid having from 16 to 20 carbons, O represents oleic acid, S2O represents a triglyceride with two S's and one O bonded, and SSS represents a triglyceride with three S's bonded.

3. The oil and/or fat for chocolate products according to claim 1, wherein a proportion of lauric acid in total saturated fatty acids is from 1 to 18 wt.%.

4. The oil and/or fat for chocolate products according to claim 2, wherein a proportion of lauric acid in total saturated fatty acids is from 1 to 18 wt.%.

5. The oil and/or fat for chocolate products according to claim 3, wherein a proportion of an unsaturated fatty acid in the total constituent fatty acids is 15 wt.% or more.

6. The oil and/or fat for chocolate products according to claim 4, wherein a proportion of an unsaturated fatty acid in the total constituent fatty acids is 15 wt.% or more.

7. The oil and/or fat for chocolate products according to claim 5, satisfying all of SFC % below:
• SFC at 10°C is 80% or more;
• SFC at 20°C is from 55% to 95%; and
• SFC at 40°C is 8% or less.

8. The oil and/or fat for chocolate products according to claim 6, satisfying all of SFC % below:
• SFC at 10°C is 80% or more;
• SFC at 20°C is from 55% to 95%; and
• SFC at 40°C is 8% or less.

9. The oil and/or fat for chocolate products according to claim 7, wherein a stearic acid content in the total constituent fatty acids is from 11 to 20 wt.%.

10. The oil and/or fat for chocolate products according to claim 8, wherein a stearic acid content in the total constituent fatty acids is from 11 to 20 wt.%.

11. A chocolate product, produced using 20 wt.% or more of the oil and/or fat for chocolate products according to any one of claims 1 to 10.

12. A method for producing the oil and/or fat for chocolate products according to any one of claims 1 to 10, the method comprising fractionating an interesterified oil with a lauric acid content of 1 to 25 wt.% and a ratio of palmitic acid content/stearic acid content of 1.5 to 5 in constituent fatty acids to remove a high melting point fraction or a high melting point fraction and a low melting point fraction.

13. An oil and/or fat, satisfying all of (a) to (d) below, the oil and/or fat having a function of suppressing transition of an oil and/or fat crystal in a chocolate product to β-form by being blended in the chocolate product:
(a) a trans fatty acid in total constituent fatty acids is in an amount of 5 wt.% or less;
(b) a lauric acid content in the total constituent fatty acids is from 1 to 13 wt.%;
(c) a fatty acid with a chain length of 16 or more carbons in the total constituent fatty acids is in an amount of 79 to 97 wt.%; and
(d) a CN38 to CN46 triglyceride content in total triglycerides is from 6 to 37.5 wt.%,
where the "CN38 to CN46 triglyceride" represents a triglyceride having a total number of carbons of constituent fatty acids of 38 to 46 in the triglycerides in the oil and/or fat.

14. A method for suppressing transition of an oil and/or fat crystal in a chocolate product to β-form by blending the oil and/or fat for chocolate products according to any one of claims 1 to 10 in the chocolate product.
